# EUROPÄISCHE PATENTSCHRIFT

(11) **EP 2 957 422 B1**
(45) Veröffentlichungstag und Bekanntmachung des Hinweises auf die Patenterteilung: **25.01.2017**
(21) Anmeldenummer: 15155302.1
(22) Anmeldetag: 17.02.2015
(51) Int. Cl.: B60C 11/01, B29D 30/54, B29D 30/56, B60C 11/02

(54) **Fahrzeugluftreifen**
Pneumatic tyres for a vehicle
Pneumatiques de véhicule

(30) Priorität: 19.05.2014 DE 102014209422
(43) Veröffentlichungstag der Anmeldung: 23.12.2015
(73) Patentinhaber: Continental Reifen Deutschland GmbH, 30165 Hannover (DE)
(72) Erfinder: Lutz, Andre, 30167 Hannover (DE); Hoffmann, Jens, 40670 Meerbusch (DE); Kristen, Florian, 30165 Hannover (DE)
(74) Vertreter: Finger, Karsten

(56) Entgegenhaltungen:
- JP-A- H02 310 107
- JP-A- 2004 098 953
- JP-A- 2007 203 964
- KR-A- 20050 118 557

## Beschreibung

Die Erfindung betrifft einen Fahrzeugluftreifen für Nutzfahrzeuge, der kaltrunderneuerbar ist, mit einer Karkasse, mit einem Gürtel, mit einem auf dem Gürtel ausgebildeten Laufstreifen mit Laufstreifenprofil mit durch Rillen von einander beabstandeten Profilbändern - wie beispielsweise Profilrippen oder Profilblockreihen - , das sich in axialer Richtung von der einen bis zur anderen Reifenschulter erstreckt, und mit zwei den Fahrzeugluftreifen in axialer Richtung A begrenzenden Seitenwänden, die sich in radialer Richtung R des Reifens jeweils von einem den Reifen nach innen hin begrenzenden Reifenwulst nach radial außen bis zum Laufstreifen erstrecken, wobei die Profilbänder in radialer Richtung R nach außen hin durch eine die Bodenkontaktoberfläche bildende, radial äußere Oberfläche und in axialer Richtung zu beiden Seiten hin jeweils durch eine Profilbandflanke, die sich in radialer Richtung nach außen bis zur radial äußeren Oberfläche erstreckt, begrenzt sind, wobei in einer Reifenschulter ein Profilband ausgebildet ist, dessen in axialer Richtung vom Fahrzeugluftreifen weg weisende Profilbandflanke in ihrer radialen Verlängerung nach innen hin radial unterhalb des Laufstreifens in die die Seitenwand nach axial außen hin begrenzende, vom Reifen wegweisend Seitenwandoberfläche übergeht.

Derartige Fahrzeugluftreifen sind bekannt.

Nutzfahrzeugluftreifen werden zum Teil im abgeriebenen Zustand kaltrunderneuert. Bei der Kaltrunderneuerung wird der nach dem Abrieb verbleibende Restlaufstreifen durch Abrauen abgetragen. Danach wird ein vorvulkanisierter Laufstreifen durch Aufkleben oder Aufvulkanisation neu aufgebracht. Der kaltrunderneuerte Reifen kann dann im Rahmen einer weiteren Nutzung über eine bestimmte Lebensdauer weiter eingesetzt werden.

Dabei ist es bisher für den mit der Kaltrunderneuerung beschäftigten Nutzer schwierig, die zum Abrauen maximal sinnvolle Abrautiefe eindeutig festzustellen. Üblicher Weise verlassen sich die Nutzer dabei weitgehend auf ihr Gefühl und ihre Erfahrung. Wird der Laufstreifen zu tief abgeraut, kann der Gürtel beschädigt und der abgeraute Reifen nicht mehr weiter verwendet werden.

Ein Fahrzeugluftreifen mit einem Indikator zur Anzeige der maximal möglichen Abrautiefe ist aus dem Dokument KR2005 0118557 A bekannt.

Der Erfindung liegt die Aufgabe zugrunde, bei einem derartigen Fahrzeugluftreifen für Nutzfahrzeuge, die kaltrunderneuert werden sollen, in einfacher Weise zuverlässig und frühzeitig erkennbar die empfohlene maximale Abrautiefe anzuzeigen.

Die Aufgabe wird erfindungsgemäß durch die Ausbildung eines Fahrzeugluftreifens für Nutzfahrzeuge, der kaltrunderneuerbar ist, mit einer Karkasse, mit einem Gürtel, mit einem auf dem Gürtel ausgebildeten Laufstreifen mit Laufstreifenprofil mit durch Rillen von einander beabstandeten Profilbändern - wie beispielsweise Profilrippen oder Profilblockreihen - , das sich in axialer Richtung von der einen bis zur anderen Reifenschulter erstreckt, und mit zwei den Fahrzeugluftreifen in axialer Richtung A begrenzenden Seitenwänden, die sich in radialer Richtung R des Reifens jeweils von einem den Reifen nach innen hin begrenzenden Reifenwulst nach radial außen bis zum Laufstreifen erstrecken, wobei die Profilbänder in radialer Richtung R nach außen hin durch eine die Bodenkontaktoberfläche bildende, radial äußere Oberfläche und in axialer Richtung zu beiden Seiten hin jeweils durch eine Profilbandflanke, die sich in radialer Richtung nach außen bis zur radial äußeren Oberfläche erstreckt, begrenzt sind, wobei in einer Reifenschulter ein Profilband ausgebildet ist, dessen in axialer Richtung vom Fahrzeugluftreifen weg weisende Profilbandflanke in ihrer radialen Verlängerung nach innen hin radial unterhalb des Laufstreifens in die die Seitenwand nach axial außen hin begrenzende, vom Reifen wegweisend Seitenwandoberfläche übergeht, gemäß den Merkmalen von Anspruch 1 gelöst, bei dem in dieser Flanke des Profilbandes längs der Erstreckung in Umfangsrichtung U zumindest abschnittsweise ausgebildete Schraffuren, die einen Abrauindikator zur Anzeige der maximalen Abrautiefe bilden, aus in Umfangsrichtung hintereinander angeordneten linienförmigen Erhebungen oder Vertiefungen ausgebildet sind, welche sich jeweils aus einer ersten radialen Position des Reifens im Radius r₁, der der radialen Position der maximalen Abrautiefe beim Kaltrunderneuern entspricht, über eine in radialer Richtung R des Reifens gemessene Erstreckungshöhe h nach radial außen erstrecken und dort enden, und welche in ihrer Position im Radius r₁ jeweils unter Einschluss eines Neigungswinkels α zur radialen Richtung R des Reifens mit 5°≤α≤60°ausgerichtet sind.

Durch diese Ausbildung wird direkt und optisch sichtbar dem Runderneuerer mit Hilfe des Abrauindikators die maximal empfohlene Abrautiefe angezeigt. Die schräg gestellte Schraffur zeigt frühzeitig und deutlich sichtbar an, ob die maximale Abrautiefe erreicht ist oder nicht. Sobald der Laufstreifen soweit abgeraut ist, dass an der axialen Außenseite des Reifens die radiale Position R₁ erreicht ist, verschwindet die Schraffur und signalisiert dem mit der Abrauung beschäftigten, dass die maximale Abrautiefe erreicht ist. Der Abrauprozess wird beendet. Der abgeraute Reifen kann der Kaltrunderneuerung zugeführt werden.

Die gezielte Schrägstellung der linienförmigen Vertiefungen bzw. Erhebungen ermöglicht dabei einen besonders positiven visuellen Effekt zum Erkennen der Abrautiefe bei gleichzeitiger hoher Haltbarkeit des Abrauindikators durch Schutz gegen unbeabsichtigten Abrieb im normalen Fahrzeugbetrieb. Die hierdurch erzeugte Schraffur erhöht den optischen Kontrast und damit die Sichtbarkeit.

Besonders vorteilhaft ist die Ausbildung eines Fahrzeugluftreifens gemäß den Merkmalen von Anspruch 2, wobei in dieser Flanke des Profilbandes längs der Erstreckung in Umfangsrichtung U eine über den gesamten Umfang erstreckt ausgebildete Schraffur, die einen Abrauindikator zur Anzeige der maximalen Abrautiefe bildet, aus in Umfangsrichtung hintereinander angeordneten linienförmigen Erhebungen oder Vertiefungen ausgebildet sind. Hierdurch wird ein intuitives Verständnis der über den Umfang erstreckten Anzeige der maximalen Abrautiefe ermöglicht.

Besonders vorteilhaft ist die Ausbildung eines Fahrzeugluftreifens gemäß den Merkmalen von Anspruch 3, wobei in der radialen Position r₁ der Abstand a zweier hintereinander angeordneten linienförmigen Erhebungen oder Vertiefungen einer Schraffur des Abrauindikators jeweils gleich groß - insbesondere mit 0,5mm≤a≤5mm - gewählt ist. Hierdurch kann die Ausbildung mit hoher Haltbarkeit der Abrauindikator umgesetzt werden.

Besonders vorteilhaft ist die Ausbildung eines Fahrzeugluftreifens gemäß den Merkmalen von Anspruch 4, wobei die Erstreckungshöhe h mit 3mm≤h≤10mm ausgebildet ist. Durch gezielte Wahl der Erstreckungshöhe kann eine zusätzliche zur Erzielung bestimmter Fahrparameter optimierte zusätzliche Abrautiefe mit angezeigt werden, die der radialen Position in der Höhe (r₁+h) entspricht. Bei dieser Ausführung erhält der Abrauende mit Erreichen der Position des Schraffurbeginns die Information, dass die für diesen Fahrparameter optimierte Abrautiefe erreicht ist, und sobald die Schraffur verschwindet die Information, dass die empfohlene maximale Abrautiefe erreicht ist. Dies ermöglicht wahlweise die Optimierung bestimmter Parameter im Rahmen der Kaltrunderneuerung .

Besonders vorteilhaft ist die Ausbildung eines Fahrzeugluftreifens gemäß den Merkmalen von Anspruch 5, wobei die den Abrauindikator bildenden Schraffur(en) aus in Umfangsrichtung U hintereinander angeordneten aus der Flanke erhaben ausgebildeten, feinen Rippen mit einer in der Flankenoberfläche gemessenen Rippenbreite b und mit einer senkrecht zur Flankenoberfläche gemessener Rippenhöhe h₁ ausgebildet sind. Dies begünstigt ein intuitives Verständnis für den Anwender.

Besonders vorteilhaft ist die Ausbildung eines Fahrzeugluftreifens gemäß den Merkmalen von Anspruch 6, wobei die Rippenhöhe h₁mit 0,5mm≤h₁≤2mm ausgebildet ist. Hierdurch kann eine hohe Haltbarkeit des Abrauindikators weiter begünstigt werden.

Besonders vorteilhaft ist die Ausbildung eines Fahrzeugluftreifens gemäß den Merkmalen von Anspruch 7, wobei die Rippenbreite b mit 0,5mm≤b≤2mm ausgebildet ist. Hierdurch kann eine hohe Haltbarkeit des Abrauindikators weiter begünstigt werden.

Besonders vorteilhaft ist die Ausbildung eines Fahrzeugluftreifens gemäß den Merkmalen von Anspruch 8, wobei zwischen zwei in Umfangsrichtung U hintereinander abschnittsweise ausgebildete Schraffuren des Abrauindikators in der Flanke zusätzliche linienförmige Zeichen zur Information über die Funktion des Abrauindikators ausgebildet sind. Dies begünstigt ein einfaches sicheres Abrauen durch Verdeutlichung der Funktion und hierdurch zusätzlich begünstigtes intuitives Verständnis für den Anwender.

Die Erfindung wird im Folgenden an Hand der in den Figuren 1 bis 7 dargestellten Ausführungsbeispiele näher erläutert. Hierin zeigen
- Fig. 1: eine Querschnittdarstellung eines durch Kaltrunderneuerung runderneuerbaren Nutzfahrzeugluftreifens in einer Querschnittebene, welche die Reifenachse beinhaltet,
- Fig. 2: eine Draufsicht auf einen Umfangsabschnitt des Laufstreifenprofils des Nutzfahrzeugluftreifens von Fig.1,
- Fig. 3: eine Seitenansicht auf den Nutzfahrzeugluftreifen von Fig.1 in der Ansicht gemäß III-III von Fig.1,
- Fig. 4: eine vergrößerte Detaildarstellung des Details IV-IV von Fig. 3 zur Erläuterung der Ausbildung des Abrauindikators,
- Fig. 5: eine Darstellung einer feinen Rippe des Abrauindikators von Fig.4 in Schnittdarstellung gemäß Schnitt V-V durch eine Rippe von Fig.4,
- Fig. 6: die Darstellung einer Rippe analog zur Darstellung von Fig.5 mit alternativer Ausbildung der Schnittkontur der Rippe und
- Fig. 7: eine vereinfachte Detaildarstellung einer alternativen Ausführung des Abrauindikators in analoger Darstellung zur Darstellung von Fig.4 - jedoch ohne explizite Darstellung der Rippen.

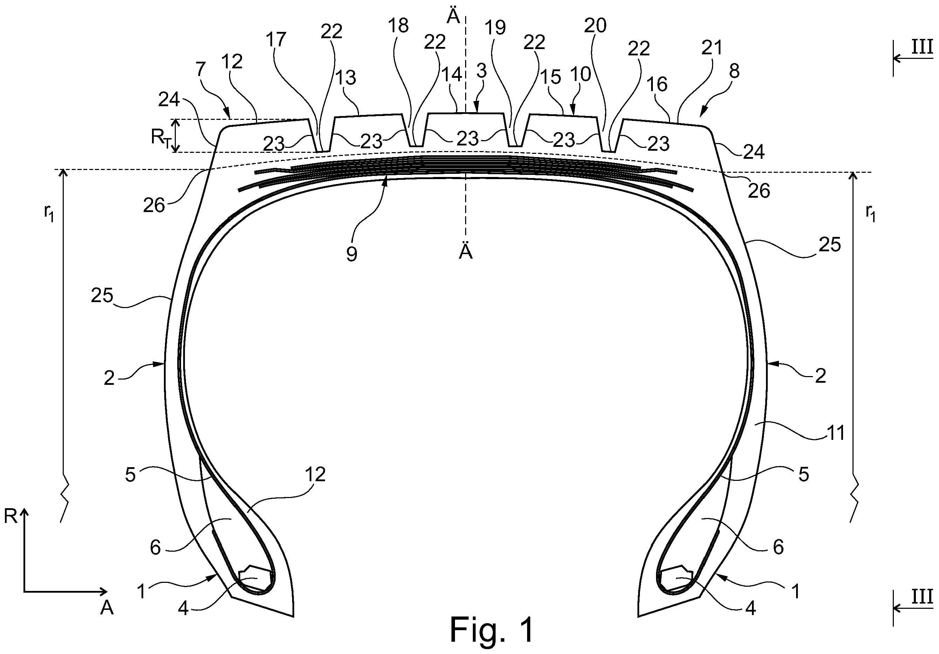

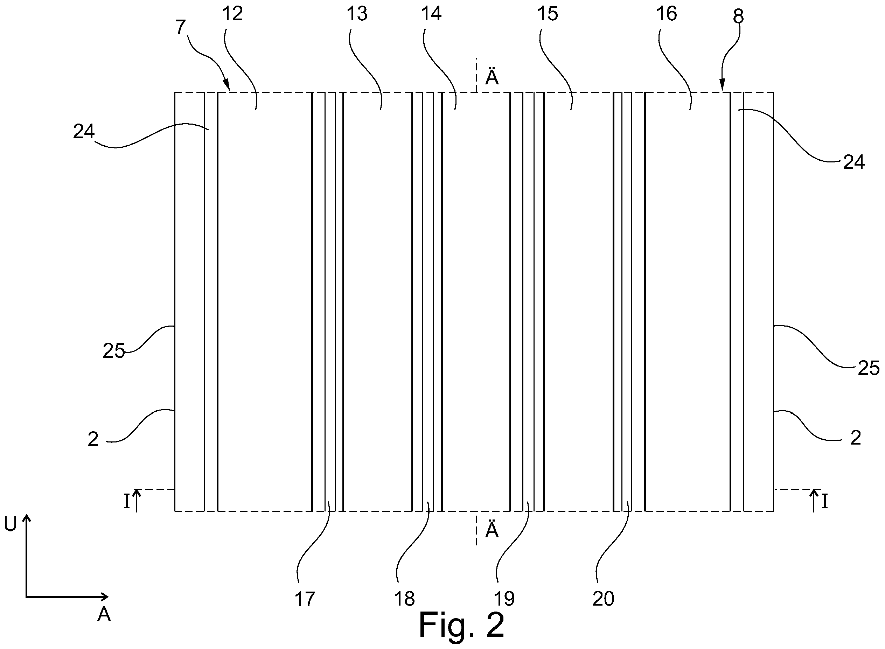

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Eingetragen ist auch die Äquatorebene Ä-Ä. Die Seitenwände 2 sind an ihrem in radialer Richtung R nach innen weisenden Erstreckungsende jeweils mit einem Wulstbereich 1 ausgebildet, in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem, in Gummi eingebettetem Draht gewickelt ausgebildet. Auf den Wulstkernen 4 ist in herkömmlicher Weise ein im Querschnitt im Wesentlichen dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse 5 ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung A entlang der radialen Innenseite des Wulstkernes 4 bis zur axialen Außenseite des Wulstkernes 4 und dann in Verlängerung auf der axialen Außenseite des Wulstkernes 4 als Umschlag nach radial außen erstreckt ausgebildet. Die Karkasse 5 erstreckt sich mit ihrem Umschlag entlang der axialen Außenseite des Apex 6 und endet auf der axialen Außenseite des Apex 6. Die Karkasse 5 ist in bekannter, nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem, besonders luftundurchlässigem Gummimaterial.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter 7 bis zu der rechten Reifenschulter 8 erstreckter Gürtel 9 ausgebildet, welcher in bekannter Weise beispielsweise aus vier in radialer Richtung R von innen nach außen übereinander und aufeinanderliegend angeordneten Gürtellagen ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter 7 bis zur rechten Reifenschulter 8 erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt. In der in axialer Richtung A vom Reifen weg weisenden Richtung wird der Seitenwandgummistreifen 11 und somit die Reifenseitenwand 2 von einer Seitenwandoberfläche 25 begrenzt, die sich über den gesamten Umfang des Reifens und in radialer Richtung ausgehend vom Wulstbereich 1 bis zum profilierten Laufstreifen 10 erstreckt.

Der profilierte Lauftreifen 10 ist aus mehreren in axialer Richtung A des Fahrzeugluftreifens nebeneinander angeordneten, über den gesamten Umfang des Fahrzeugluftreifens erstreckten und jeweils in Umfangsrichtung U ausgerichteten Umfangsrippen 12, 13, 14, 15 und 16 ausgebildet. Die Umfangsrippe 12 ist in der linken Reifenschulter 7 angeordnet ausgebildet. Die Umfangsrippe 16 ist in der rechten Reifenschulter 8 angeordnet ausgebildet. Die Umfangsrippe 12 und die Umfangsrippe 13 sind in axialer Richtung A des Fahrzeugluftreifens durch eine über den gesamten Umfang des Fahrzeugluftreifens erstreckte und in Umfangsrichtung U ausgerichtete Umfangsrille 17 voneinander beabstandet. Die Umfangsrippe 13 und die Umfangsrippe 14 sind in axialer Richtung A durch eine über den gesamten Umfang des Fahrzeugluftreifens erstreckte und in Umfangsrichtung U ausgerichtete Umfangsrille 18 voneinander beabstandet. Die Umfangsrippe 14 und die Umfangsrippe 15 sind in axialer Richtung A durch eine über den gesamten Umfang des Fahrzeugluftreifens erstrecket und in Umfangsrichtung U ausgerichtete Umfangsrille 19 voneinander beabstandet. Die Umfangsrippe 15 und die Umfangsrippe 16 sind in axialer Richtung A durch eine über den gesamten Umfang des Fahrzeugluftreifens erstreckte und in Umfangsrichtung U ausgerichtete Umfangsrille 20 voneinander beabstandet.

Die Umfangsrippen 12, 13, 14, 15 und 16 jeweils sind in radialer Richtung R nach außen hin durch eine die Bodenkontaktoberfläche bildende Mantelfläche 21 begrenzt.

Die Umfangsrillen 17, 18, 19 und 20 sind in radialer Richtung R nach innen hin jeweils durch einen über den gesamten Umfang des Fahrzeugluftreifens erstreckten Rillengrund 22 begrenzt.

Die Umfangsrippe 13 ist in axialer Richtung A des Fahrzeugluftreifens zu beiden Seiten hin jeweils durch eine - eine Rillenwand der zur jeweiligen axialen Richtung hin angrenzenden Umfangsrille 17 bzw. 18 bildende - Rippenflanke 23 begrenzt. Die Umfangsrippe 14 ist in axialer Richtung A zu beiden Seiten hin jeweils durch eine - eine Rillenwand der zur jeweiligen axialen Richtung A hin angrenzenden Umfangsrille 18 bzw. 19 bildende - Rippenflanke 23 begrenzt. Die Umfangsrippe 15 ist in axialer Richtung A zu beiden Seiten hin jeweils durch eine - eine Rillenwand der zur jeweiligen axialen Richtung jeweils angrenzenden Umfangsrille 19 bzw. 20 bildende - Rippenflanke 23 begrenzt. Die Umfangsrippe 12 ist in axialer Richtung A zur angrenzenden Umfangsrille 17 hin mit einer - die zur Umfangsrippe 12 hinweisende Rillenwand der Umfangsrille 17 bildenden - Rippenflanke 23 begrenzt. Die Umfangsrippe 16 ist in axialer Richtung A zur angrenzenden Umfangsrille 20 hin mit einer - die zur Umfangsrippe 16 hinweisende Rillenwand der Umfangsrille 20 bildenden - Rippenflanke 23 begrenzt.

Die Rippenflanken 23 der Umfangsrippen 12, 13, 14, 15 und 16 erstrecken sich dabei jeweils ausgehend vom Rillengrund 22 derjenigen Umfangsrille 17, 18, 19 bzw. 20, deren Rillenwand sie bilden, bis zur radial äußeren Oberfläche 21 der jeweiligen Umfangsrippe 12, 13, 14, 15 bzw. 16, die sie axial begrenzen. Die Umfangsrillen 17, 18, 19, 20 sind von der radial äußeren Oberfläche 21 der jeweils angrenzenden Umfangsrippen 12, 13, 14, 15 bzw. 16 ausgehend in radialer Richtung R nach innen hin bis zum Rillengrund 22 mit einer Rillentiefe P_{T} ausgebildet, welche der Profiltiefe entspricht. P_{T} ist dabei mit 8mm ≤ P_{T} ≤ 30 mm ausgebildet. Bei gängigen Nutzfahrzeugreifen ist die Profiltiefe typischerweise mit 10mm ≤ P_{T} ≤ 25 mm ausgebildet.

Die Umfangsrippe 7 ist auf ihrer in axialer Richtung von der Umfangsrille 17 und vom Reifen wegweisenden Seite hin von einer Flanke 24 begrenzt, welche sich in Umfangsrichtung U über den gesamten Umfang des Fahrzeugluftreifens und in radialer Richtung R ausgehend von der radial äußeren Oberfläche 21 der Umfangsrippe 12 nach innen hin bis zur Seitenwand 2 erstreckt und dort in ihrer Verlängerung in die Seitenwandoberfläche 25 übergeht. Ebenso ist die Umfangsrippe 16 auf ihrer in axialer Richtung A des Fahrzeugluftreifens von der Umfangsrille 20 und somit vom Reifen weg weisenden Seite hin von einer Flanke 24 begrenzt, welche sich in Umfangsrichtung U über den gesamten Umfang des Fahrzeugluftreifens und in radialer Richtung ausgehend von der radial äußeren Oberfläche 21 der Umfangsrippe 16 nach innen hin bis zur Reifenwand 2 erstreckt und dort in ihrer Verlängerung in die Seitenwandoberfläche 25 übergeht. Im radialen Erstreckungsbereich der Flanke 24 der Umfangsrippe 16 ist ebenso wie im radialen Erstreckungsbereich der Flanke 24 der Umfangsrippe 12 jeweils ein Abrauindikator 26 ausgebildet. Die Ausbildung des Abrauindikators 26 wird im Folgenden der Einfachheit halber nur anhand des in der Flanke 24 der Umfangsrippe 16 ausgebildeten Abrauindikators weiter erläutert. Die Ausbildung im Bereich der Flanke 24 der Umfangsrippe 12 ist in analoger Weise.

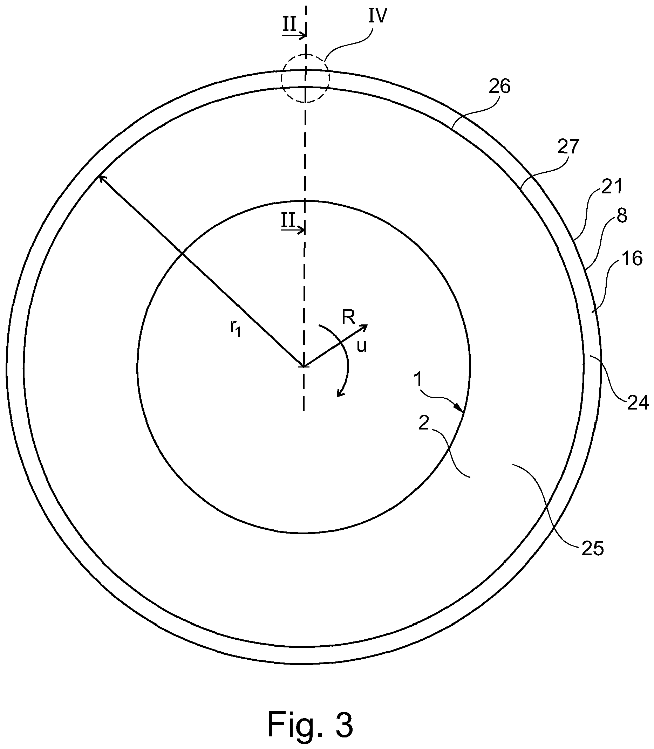

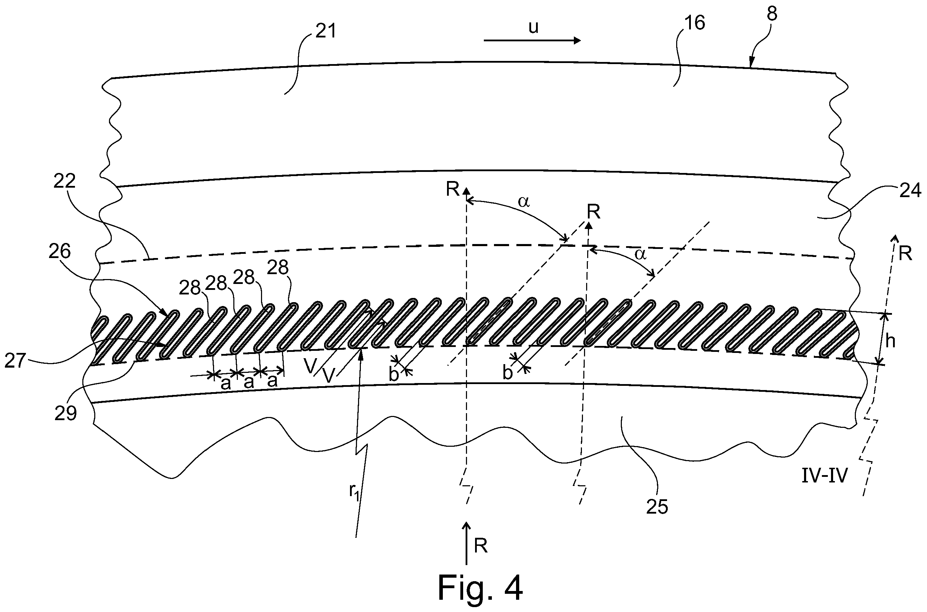

Wie in den Figuren 1, 3 und 4 dargestellt ist, ist der Abrauindikator 26 aus einer über den gesamten Umfang des Fahrzeuglufteifens erstreckten Schraffur 27 ausgebildet, die sich ringförmig im Radius r₁ um die Achse des Fahrzeugluftreifens erstreckt und ausgehend von der radialen Position r₁ in radialer Richtung R nach außen hin über eine Höhe h erstreckt. Die Radius r₁ entspricht dem Radius der maximalen, empfohlenen Abrautiefe des Fahrzeugluftreifens. Die Schraffur 27 ist - wie in Figur 4 dargestellt - aus einer Vielzahl von in Umfangsrichtung U des Fahrzeugluftreifens hintereinander auf der Flanke 24 der Umfangsrippe 21 angeordneten feinen Rippen 28 ausgebildet. Die feinen Rippen 28 sind mit ihrer - in ihrer Haupterstreckungsrichtung gebildeten - Längserstreckung in der Flanke 24 im Wesentlichen geradlinig erstreckt ausgebildet. Die feinen Rippen 28 sind mit einer in der Flanke 24 senkrecht zur Haupterstreckungsrichtung der Rippen 28 gemessenen Erstreckungsbreite b und senkrecht zur Flanke 24 gemessenen Erstreckungshöhe h₁ ausgebildet. Die Erstreckungsbreite b ist dabei längs der Haupterstreckungsrichtung der feinen Rippe 28 im Wesentlichen konstant. Ebenso ist die Rippenhöhe h₁ längs der Haupterstreckungsrichtung der feinen Rippe 28 im Wesentlichen konstant. Die Rippenhöhe h₁ ist mit 0,5mm ≤ h₁ ≤ 2mm, beispielsweise mit h₁ = 1mm ausgebildet. Die Rippenbreite b ist mit 0,5mm ≤ 2mm, beispielsweise mi b = 1mm ausgebildet. Die Rippen 28 erstrecken sich ausgehend von einer in einer radialen Position des Reifens im Radius r₁ ausgebildeten Kreislinie 29 um die Reifenachse, die der maximalen empfohlenen Abrautiefe 29 entspricht und die die Rippen 28 jeweils an deren radial innerem Erstreckungsende in der Flanke 24 tangiert, nach radial außen bis in eine Position radial außerhalb der Kreislinie mit r₁, die im radialen Abstand h von der Kreislinie 29 der maximalen Abrautiefe angeordnet ist. Die feinen Rippen 28 sind dabei mit ihrer Haupterstreckung in Umfangsrichtung U des Reifens gesehen jeweils ausgehend von ihrem jeweiligen Erstreckungsbeginn in der Porition der Kreislinie 29 im Radius r₁ längs ihrer Haupterstreckung nach radial außen hin zur Umfangsrichtung U mit gleicher Umfangsorientierung geneigt ausgerichtet ausgebildet und schließen dabei mit ihrem geradlinigen Erstreckungsverlauf in der Schnittpositon mit der durch den Radius r₁ gebildeten Kreislinie 29 - die die Position der maximalen Abrautiefe angibt - jeweils einen Neigungswinkel α zur radialen Richtung R ein mit 5° ≤ α ≤ 60°, beispielsweise mit α = 40°.

In der Position der der Position der maximalen Abrautiefe entsprechenden Kreislinie 29 ist der Abstand a, der die Kreislinie 29 jeweils berührenden und in Umfangsrichtung U nebeneinander angeordneten feinen Rippen 28 jeweils gleichgroß gewählt mit 0,5 mm ≤ a ≤ 5mm. Beispielsweise ist a = 1mm groß.

Die Erstreckungshöhe h ist mit 3mm ≤ h ≤ 10mm, beispielsweise mit h = 5mm gewählt ausgebildet.

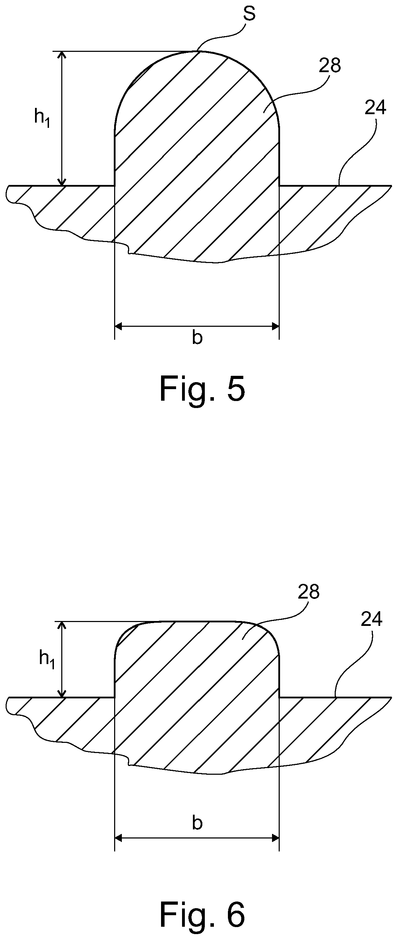

Wie in Fig. 5 dargestellt ist, sind die Rippen 28 in einem senkrecht zu ihrer Haupterstreckungsrichtung in der Flanke 24 gebildeten Querschnitt jeweils mit einer U-förmigen Schnittkontur mit einem im Abstand h₁ von der Flankenoberfläche 24 angeordneten Scheitelpunkt S ausgebildet. In anderer - nicht dargestellter - Ausführung ist die Schnittkontur der Rippe 28 jeweils parabelförmig oder halbkreisförmig mit im Abstand h₁ von der Flankenoberfläche 24 angeordneten Scheitelpunkt S ausgebildet.

In anderer, in Fig. 6 dargestellter Ausführung ist die Schnittkontur der feinen Rippen 28 jeweils im Abstand h₁ von der Flanke 24 mit einer in der Schnittfläche im Abstand h₁ geradlinigen Schnittkonturlinie ausgebildet, welche die Rippe 28 im Abstand h₁ von der Flanke 24 in der senkrecht zur Flanke von der der Flanke wegweisenden Richtung begrenzt.

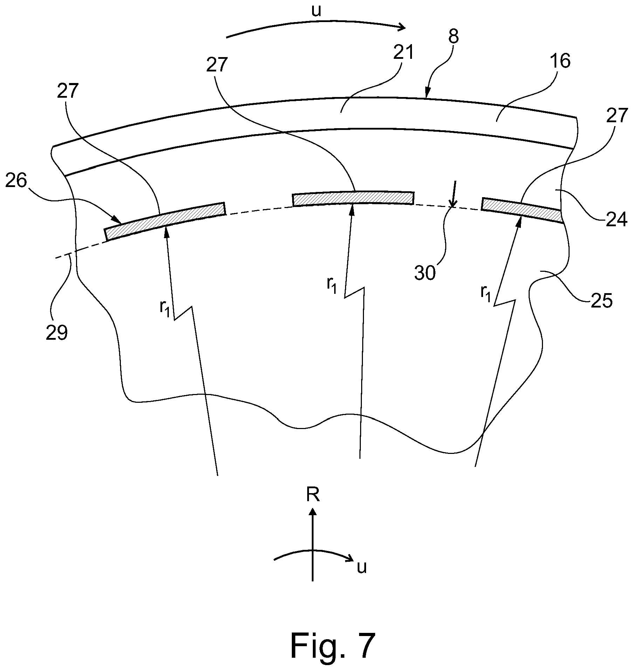

Fig. 7 zeigt in vereinfachter Weise ein weiteres Ausführungsbeispiel, bei dem der Abriebindikator 26 aus über den Umfangs U des Fahrzeugluftreifens verteilten, in Umfangsrichtung U hintereinander angeordneten und jeweils voneinander beabstandeten Umfangserstreckungsabschnitten mit einer entsprechenden Schraffur 27 ausgebildet sind. Die Schraffur 27 ist wie oben dargestellt und beschrieben ausgebildet und erstreckt sich jeweils ausgehend von der die maximale Abrautiefe im Radius r₁ bildenden Kreislinie 29 nach radial außen über eine in radialer Richtung R gemessene Erstreckungshöhe h.

Fig. 7 zeigt darüber hinaus eine weiteres Ausführungsbeispiel, bei dem zwischen zwei in Umfangsrichtung U hintereinander ausgebildeten Abschnitten mit Schraffur 27 in die Flanke 24 eine zusätzliche durch linienförmige Gravur ausgebildete Markierung 30 ausgebildet ist, die auf die Bedeutung des Abriebindikators 26 hinweist. Im dargestellten Ausführungsbeispiel von Fig. 7 ist der Einfachheit halber lediglich ein Pfeilelement 30 dargestellt, welches auf die Position der durch die Schraffur 27 nach radial innen hin gebildeten Kreislinie 29 hin deutet und signalisiert, dass hier die radiale Position für die maximale Abrauung erreicht ist. In anderer - nicht dargestellter Ausführung - sind Worte wie "maximale Abrautiefe" eingraviert.

### Bezugszeichenliste

### (Teil der Beschreibung)

- 1: Wulstbereich
- 2: Seitenwand
- 3: Kronenbereich
- 4: Wulstkern
- 5: Karkasse
- 6: Apex
- 7: Reifenschulter
- 8: Reifenschulter
- 9: Gürtel
- 10: Profilierter Laufstreifen
- 11: Seitenwandgummistreifen
- 12: Umfangsrippe
- 13: Umfangsrippe
- 14: Umfangsrippe
- 15: Umfangsrippe
- 16: Umfangsrippe
- 17: Umfangsrille
- 18: Umfangsrille
- 19: Umfangsrille
- 20: Umfangsrille
- 21: Radial äußere Oberfläche
- 22: Rillengrund
- 23: Flanke
- 24: Flanke
- 25: Seitenwandoberfläche
- 26: Abrauindikator
- 27: Schraffur
- 28: Feine Rippe
- 29: Position der maximalen Abrautiefe
- 30: Zeichen

## Patentansprüche

1. Fahrzeugluftreifen für Nutzfahrzeuge, der kaltrunderneuerbar ist, mit einer Karkasse (5), mit einem Gürtel (9), mit einem auf dem Gürtel (9) ausgebildeten Laufstreifen (10) mit Laufstreifenprofil mit durch Rillen (17,18,19,20) von einander beabstandeten Profilbändern (12,13,14,15,16) - wie beispielsweise Profilrippen oder Profilblockreihen - , das sich in axialer Richtung A von der einen (7) bis zur anderen Reifenschulter (8) erstreckt, und mit zwei den Fahrzeugluftreifen in axialer Richtung A begrenzenden Seitenwänden (2), die sich in radialer Richtung R des Reifens jeweils von einem den Reifen nach innen hin begrenzenden Reifenwulst (1) nach radial außen bis zum Laufstreifen (10) erstrecken,
wobei die Profilbänder (12,13,14,15,16) in radialer Richtung R nach außen hin durch eine die Bodenkontaktoberfläche bildende radial äußere Oberfläche (21) und in axialer Richtung (1) zu beiden Seiten hin jeweils durch eine Profilbandflanke (23,24), die sich in radialer Richtung nach außen bis zur radial äußeren Oberfläche (21) erstreckt, begrenzt sind,
wobei in einer Reifenschulter (8) ein Profilband (16) ausgebildet ist, dessen in axialer Richtung A vom Fahrzeugluftreifen weg weisende Profilbandflanke (24) in ihrer radialen Verlängerung nach innen hin radial unterhalb des Laufstreifens (10) in die die Seitenwand (2) nach axial außen hin begrenzende, vom Reifen wegweisend Seitenwandoberfläche (25) übergeht,
**dadurch gekennzeichnet,**
**dass** in dieser Flanke (24) des Profilbandes (16) längs der Erstreckung in Umfangsrichtung U zumindest abschnittsweise ausgebildete Schraffuren (27), die einen Abrauindikator (26) zur Anzeige der maximalen Abrautiefe bilden, aus in Umfangsrichtung U hintereinander angeordneten linienförmigen Erhebungen (28) oder Vertiefungen ausgebildet sind, welche sich jeweils aus einer ersten radialen Position des Reifens im Radius r₁, der der radiale Position der maximalen Abrautiefe beim Kaltrunderneuern entspricht, über eine in radialer Richtung R des Reifens gemessene Erstreckungshöhe h nach radial außen erstrecken und dort enden, und welche in ihrer Position im Radius r₁ jeweils unter Einschluss eines Neigungswinkels α zur radialen Richtung R des Reifens mit 5°≤α≤60°ausgerichtet sind.

2. Fahrzeugluftreifen gemäß den Merkmalen von Anspruch 1,
wobei in dieser Flanke (24) des Profilbandes (16) längs der Erstreckung in Umfangsrichtung U eine über den gesamten Umfang erstreckt ausgebildete Schraffur (27), die einen Abrauindikator (26) zur Anzeige der maximalen Abrautiefe bildet, aus in Umfangsrichtung U hintereinander angeordneten linienförmigen Erhebungen (8) oder Vertiefungen ausgebildet sind.

3. Fahrzeugluftreifen gemäß den Merkmalen von Anspruch 1 oder 2,
wobei in der radialen Position r₁ der Abstand a zweier hintereinander angeordneten linienförmigen Erhebungen (8) oder Vertiefungen einer Schraffur (27) des Abrauindikators (26) jeweils gleich groß - insbesondere mit 0,5mm≤a≤5mm - gewählt ist.

4. Fahrzeugluftreifen gemäß den Merkmalen von einem der vorangegangenen Ansprüche,
wobei die Erstreckungshöhe h mit 3mm≤h≤10mm ausgebildet ist.

5. Fahrzeugluftreifen gemäß den Merkmalen von einem oder mehreren der vorangegangenen Ansprüche,
wobei die den Abrauindikator (26) bildenden Schraffur(en) (27) aus in Umfangsrichtung U hintereinander angeordneten aus der Flanke (24) erhaben ausgebildeten, feinen Rippen (8) mit einer in der Flankenoberflache gemessenen Rippenbreite b und mit einer senkrecht zur Flankenoberfläche gemessener Rippenhöhe h₁ ausgebildet sind.

6. Fahrzeugluftreifen gemäß den Merkmalen von Anspruch 5,
wobei die Rippenhöhe h₁mit 0,5mm≤h₁≤2mm ausgebildet ist.

7. Fahrzeugluftreifen gemäß den Merkmalen von Anspruch 5 oder 6,
wobei die Rippenbreite b mit 0,5mm≤b≤2mm ausgebildet ist.

8. Fahrzeugluftreifen gemäß den Merkmalen von Anspruch 1,
wobei zwischen zwei in Umfangsrichtung U hintereinander abschnittsweise ausgebildete Schraffuren (27) des Abrauindikators (26) in der Flanke (24) zusätzliche linienförmige Zeichen (30) zur Information über die Funktion des Abrauindikators ausgebildet sind.

## Claims

1. Pneumatic vehicle tyre for commercial vehicles, which tyre can be subjected to cold retreading, having a carcass (5), having a belt (9), having a tread (10) which is configured on the belt (9) with a tread profile with profile strips (12, 13, 14, 15, 16), such as profile ribs or profile bar rows, which are spaced apart from one another by way of grooves (17, 18, 19, 20), which tread profile extends in the axial direction A from the one (7) to the other tyre shoulder (8), and having two sidewalls (2) which delimit the pneumatic vehicle tyre in the axial direction A and extend in the radial direction R of the tyre in each case from a tyre bead (1), which delimits the tyre towards the inside, radially to the outside as far as the tread (10), the profile strips (12, 13, 14, 15, 16) being delimited in the radial direction R towards the outside by way of a radially outer surface (21) which forms the ground contact surface and in the axial direction (1) towards both sides in each case by way of a profile strip flank (23, 24) which extends in the radial direction towards the outside as far as the radially outer surface (21), a profile strip (16) being configured in a tyre shoulder (8), the profile strip flank (24) of which profile strip (16), which points away from the pneumatic vehicle tyre in the axial direction A merges in its radial extension radially towards the inside below the tread (10) into the sidewall surface (25) which delimits the sidewall (2) axially towards the outside and points away from the tyre, **characterized in that** hatched portions (27) which are configured at least in sections in the said flank (24) of the profile strip (16) along the extent in the circumferential direction U and form a buffing indicator (26) for indicating the maximum buffing depth are configured from linear elevations (28) or depressions which are arranged behind one another in the circumferential direction U, extend in each case from a first radial position of the tyre in the radius r₁ which corresponds to the radial position of the maximum buffing depth during cold retreading, radially to the outside over an extent height h which is measured in the radial direction R of the tyre, and end there, and which are oriented in their position in the radius r₁ in each case with the inclusion of an angle of inclination α with respect to the radial direction R of the tyre where 5° ≤ α ≤ 60°.

2. Pneumatic vehicle tyre according to the features of claim 1, a hatched portion (27) which is configured so as to extend over the entire circumference and forms a buffing indicator (26) for indicating the maximum buffing depth being configured in the said flank (24) of the profile strip (16) along the extent in the circumferential direction U from linear elevations (8) or depressions which are arranged behind one another in the circumferential direction U.

3. Pneumatic vehicle tyre according to the features of claim 1 or 2, the spacing a in the radial position r₁ of two linear elevations (8) or depressions of a hatched portion (27) of the buffing indicator (26) which are arranged behind one another being selected in each case to be equally great, in particular where 0.5 mm ≤ a ≤ 5 mm.

4. Pneumatic vehicle tyre according to the features of one of the preceding claims, the extent height h being configured such that 3 mm ≤ h ≤ 10 mm.

5. Pneumatic vehicle tyre according to the features of one or more of the preceding claims, the hatched portion or portions (27) which forms/form the buffing indicator (26) being configured from fine ribs (8) which are arranged behind one another in the circumferential direction U and are configured in an elevated manner from the flank (24), with a rib width b which is measured in the flank surface and with a rib height h₁ which is measured perpendicularly with respect to the flank surface.

6. Pneumatic vehicle tyre according to the features of Claim 5, the rib height h₁ being configured such that 0.5 mm ≤ h₁ ≤ 2 mm.

7. Pneumatic vehicle tyre according to the features of Claim 5 or 6, the rib width b being configured such that 0.5 mm ≤ b ≤ 2 mm.

8. Pneumatic vehicle tyre according to the features of Claim 1, additional linear marks (30) for information about the function of the buffing indicator being configured in the flank (24) between two hatched portions (27) of the buffing indicator (26) which are configured in sections behind one another in the circumferential direction U.

## Revendications

1. Pneumatique de véhicule pour des véhicules utilitaires, qui peut être rechapé à froid, avec une carcasse (5), avec une ceinture (9), avec une bande de roulement (10) formée sur la ceinture (9) avec un profil de bande de roulement comprenant des bandes de profil (12, 13, 14, 15, 16) espacées l'une de l'autre par des sillons (17, 18, 19, 20) - comme par exemple des nervures de profil ou des lignes de blocs de profil - qui s'étend en direction axiale A d'un épaulement de pneumatique (7) jusqu'à l'autre épaulement de pneumatique (8), et avec deux parois latérales (2) limitant le pneumatique de véhicule en direction axiale A, qui s'étendent radialement vers l'extérieur, en direction radiale R du pneumatique, chaque fois depuis un talon de pneumatique (1) limitant le pneumatique vers l'intérieur jusqu'à la bande de roulement (10), dans lequel les bandes de profil (12, 13, 14, 15, 16) sont limitées en direction radiale R vers l'extérieur par une surface radialement extérieure (21) formant une surface de contact avec le sol et en direction axiale (1) vers les deux côtés respectivement par un flanc de bande de profil (23, 24), qui s'étend en direction radiale vers l'extérieur jusqu'à la surface radialement extérieure (21),
dans lequel une bande de profil (16) est formée dans un épaulement de pneumatique (8), dont le flanc de bande de profil (24) orienté en direction axiale A vers l'extérieur du pneumatique de véhicule se poursuit dans son prolongement radial radialement vers l'intérieur en dessous de la bande de roulement (10) dans la surface de paroi latérale (25) tournée vers l'extérieur du pneumatique et limitant axialement vers l'extérieur la paroi latérale (2),
**caractérisé en ce que**
des hachures (27) formées au moins localement dans ce flanc (24) de la bande de profil (16) le long de l'extension en direction périphérique U, qui forment un indicateur de meulage (26) pour indiquer la profondeur de meulage maximale, sont composées de protubérances (28) ou de rainures linéaires disposées l'une derrière l'autre en direction périphérique U, qui s'étendent radialement vers l'extérieur chaque fois d'une première position radiale du pneumatique au rayon r₁, qui correspond à la position radiale de la profondeur de meulage maximale lors du rechapage à froid, sur une hauteur d'extension h mesurée en direction radiale R du pneumatique et qui s'y terminent, et qui sont orientées dans leur position au rayon r₁ chaque fois en formant un angle d'inclinaison α par rapport à la direction radiale R du pneumatique avec 5° ≤ α ≤ 60°.

2. Pneumatique de véhicule selon les caractéristiques de la revendication 1, dans lequel une hachure (27) formée dans ce flanc (24) de la bande de profil (16) et étendue sur toute la périphérie le long de l'extension en direction périphérique U, qui forme un indicateur de meulage (26) pour indiquer la profondeur de meulage maximale, est constituée de protubérances (8) ou de rainures linéaires disposées l'une derrière l'autre dans la direction périphérique U.

3. Pneumatique de véhicule selon les caractéristiques de la revendication 1 ou 2, dans lequel dans la position radiale r₁ la distance a de deux protubérances (8) ou rainures linéaires disposées l'une derrière l'autre d'une hachure (27) de l'indicateur de meulage (26) est choisie de même grandeur - en particulier avec 0,5 mm ≤ a ≤ 5 mm.

4. Pneumatique de véhicule selon les caractéristiques d'une quelconque des revendications précédentes, dans lequel la hauteur d'extension h est réalisée avec 3 mm ≤ h ≤ 10 mm.

5. Pneumatique de véhicule selon les caractéristiques d'une ou de plusieurs des revendications précédentes, dans lequel la/les hachure(s) (27) formant l'indicateur de meulage (26) est/sont constituée(s) de fines nervures (8) disposées l'une derrière l'autre dans la direction périphérique U et sous forme saillante hors du flanc (24), avec une largeur de nervure b mesurée dans la surface du flanc et avec une hauteur de nervure h₁ mesurée perpendiculairement à la surface du flanc.

6. Pneumatique de véhicule selon les caractéristiques de la revendication 5, dans lequel la hauteur de nervure h₁ est réalisée avec 0,5 mm ≤ h₁ ≤ 2 mm.

7. Pneumatique de véhicule selon les caractéristiques de la revendication 5 ou 6, dans lequel la largeur de nervure b est réalisée avec 0,5 mm ≤ b ≤ 2 mm.

8. Pneumatique de véhicule selon les caractéristiques de la revendication 1, dans lequel des signes linéaires supplémentaires (30) sont formés dans le flanc (24) entre deux hachures (27) de l'indicateur de meulage (26) formées localement l'une derrière l'autre en direction périphérique U pour l'information concernant la fonction de l'indicateur de meulage.
